# EUROPEAN PATENT APPLICATION

(11) **EP 3 438 044 A1**
(43) Date of publication of application: **06.02.2019**
(21) Application number: 17382535.7
(22) Date of filing: 02.08.2017
(51) Int. Cl.: C01B 25/00, B01D 21/01, B09B 3/00, C02F 1/54

(54) **PROCESS AND INSTALLATION FOR THE RECOVERY OF PHOSPHORUS FROM WASTE INCINERATION ASH**

(71) Applicant: Fertiberia, S.A., 28046 Madrid (ES)
(72) Inventor: The designation of the inventor has not yet been filed
(74) Representative: Herrero & Asociados, S.L.

(57) **Abstract**

The present invention envisages a method for the recovery of phosphorus from waste incineration ash comprising a) a step of digesting the ashes with a 20-40% sulfuric acid solution, making a first solid phase and a first liquid phase, b) a step of continuously separating, without energy consumption, of the liquid and solid phases, c) a step of chemical precipitating, thermally coupled to the digesting of the ashes of step a), of the phosphate ions of the first liquid phase, by means of the addition of lime, until reaching a pH of 4.0-4.5, obtaining a second liquid phase, rich in acid, and a second solid phase, made up of phosphates and sulfates and d) a step of continuously separating, without energy consumption, of the second liquid and solid phase, the latter being the final product. Likewise, the installation for carrying out said method is envisaged.

## Description

### Field of the invention

The present invention relates to the treatment of waste incineration ash. Specifically, the invention relates to a method for the recovery of phosphorus from sludge incineration ash from water or industrial waste treatment plants, from animal bones or animal manure, as well as an installation to carry it out.

### Background of the invention

Among the suitable methods for the recovery of phosphorus from sewage sludge incineration ash there are thermal and leaching methods. The thermal methods consist of applying large amounts of energy to decompose the ash into the different elements thereof, phosphorus being among them. The high use of energy in these types of methods means that they are not of interest from an environmental and economical point of view. In turn, the leaching processes extract the phosphorus by using a strong acid that is able to solubilize it.

Usually, in the state of the art, the leaching processes for recovering phosphorus have been carried out using acids with a high cost, such as hydrochloric, phosphoric or nitric acid (for example, US 3304157 A or US3988420).

There are also alternatives to the use of these acids, as described in documents JP3625685 or JP2012096972, in which sulfuric acid is used as the main acid in the leach liquor.

For example, in document JP3625625 a method is described for the recovery of phosphorous from sludge incineration ash, in which the ash is mixed with sulfuric acid solutions in order to extract the phosphorus in the acid solution. The insoluble material is removed by means of a centrifuge, or similar, obtaining an acid solution rich in phosphates. After digestion, the acid solution is passed through an adsorption apparatus full of a metal hydrate, where the acid solution is adsorbed, with the phosphate ions.

Afterwards, an alkaline solution (Ca(OH)₂) is passed through it, recovering the phosphate ions.

In the patent JP 2012096972, a method is described for extracting inorganic phosphorus from incineration ash of excrement of livestock animals. In a first step, a sulfuric acid solution is added to the ash, obtaining a first solid-liquid mixture. The phosphorus is eluted into the liquid fraction. In a second step, calcium chloride is added to the solution with the eluted phosphorus, such that the sulfate ions precipitate in the form of calcium chloride, facilitating the removal thereof. Moreover, calcium hydroxide is added to the liquid fraction free of sulfuric acid, recovering the phosphorus as inorganic phosphorus mainly in the form of apatite or similar.

Franz, M. et al. ("Phosphate fertilizer from sewage sludge ash (SSA)", Waste Management 28 (2008) 1809-1818*"*) proposes a method for processing, in three steps, the sludge incineration ash from sewage plants. In a first step, the ashes are digested with sulfuric acid (12-14% by weight). In a second step, the purification of the digestion solution is carried out by removing the heavy metals, by means of precipitation with sulfide or ion exchange in chelating resins. In the third step, the phosphates are precipitated as calcium phosphates using lime slurry, starting from a pH of 10, decreasing to a pH of 1 after 8 min, and finally reaching a stable pH of 10.5 at 15 min. The sludge with phosphates obtained in this third step is dehydrated, dried and ground in order to obtain a fertilizer.

In these processes described in the state of the art, the use of sulfuric acid requires an additional step to be carried out in order to remove the sulfate ions, which makes the method long, complex and costly, because of the installations needed to carry it out as well as the operating expenses.

Based on the drawbacks of the methods available in the state of the art, the authors of the present invention, after conducting important research, have developed a simpler, faster and more cost-effective method for the recovery of phosphorus from waste incineration ash than those described until now.

For the embodiment of this new method, the authors of the invention have designed a new system of reactors that mainly consists of two concentric reactors.

This invention entails an ash treatment method that is more environmentally friendly than previously known processes, since the design of the new system of reactors enables the omission of high-temperature or calcination treatment steps, as well as prevents the intensive use of energy in the separation steps, thermally coupling some processes in order to save energy in a novel manner. Therefore, this method consumes less energy. Furthermore, this method generates less waste, since the majority of them are recoverable in the market for the use thereof in applications such as agriculture, construction or soil stabilization.

### Brief description of the drawings

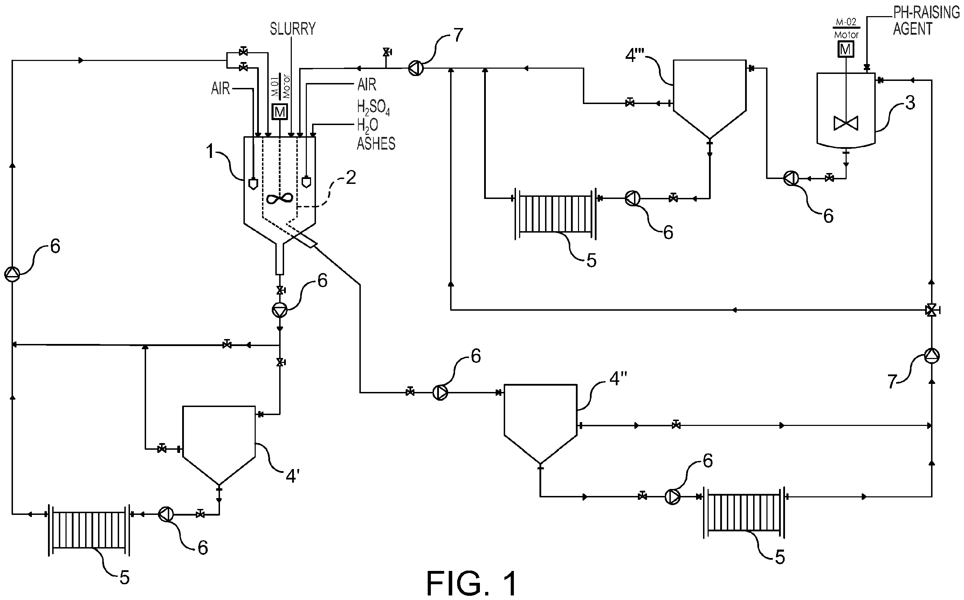

Figure 1 shows a diagram of an embodiment of the installation according to the present invention.

### Detailed description of the invention

The present invention has the object of remedying the problems of the state of the art in relation to the methods for the recovery of phosphorus from waste incineration ash.

In order to solve these problems, in a first main aspect of the invention, a new method is envisaged that comprises the following steps:
a) Digestion of the ashes with a leach liquor or solution made up of water and sulfuric acid in a concentration comprised between 20 and 40%, preferably 25%, making up a first solid phase, which contains impurities, and a first liquid phase, rich in phosphate ions, at a temperature comprised between 60 and 75°C, and at a pH lower than 1.8, during a time comprised between 60 and 120 minutes, preferably 1 hour,
b) Continuous separation, without energy consumption, of the first liquid phase, obtained in step a), from the first solid phase,
c) Chemical precipitation, thermally coupled to the digestion of the ashes from step a), of the phosphate ions contained in the first liquid phase, by means of the addition of a calcium compound to the first liquid phase, at a temperature comprised between 60 and 70°C, until reaching a pH comprised between 4.0 and 4.5, giving rise to a second liquid phase, rich in acid, and a second solid phase, made up of a mixture of monocalcium phosphate, dicalcium phosphate and calcium sulfate, and
d) Continuous separation, without energy consumption, of the second solid phase from the second liquid phase.

The starting ashes of the method of the invention mainly come from the incineration of sludge from water or industrial waste treatment plants, from animal bones or from animal manure.

The use of sulfuric acid (H₂SO₄) as a digesting agent in the leach liquor is due to the effectiveness thereof when extracting the different elements contained in the ashes, in addition to the fact that it makes the process less costly than with other acids. It is preferred that the leach liquor does not contain any acid apart from sulfuric acid. Moreover, the presence of another acid in the leach liquor could cause salts to be produced, these being able to be soluble or insoluble in water. The removal of these salts, and the separation thereof from the phosphate ion salts, requires additional separation steps (liquid-liquid extraction, chemical precipitation or mechanical separation). Therefore, the use of sulfuric acid as a digesting agent in the leach liquor in step a) further enables optimizing the number of steps in the process, making the process more interesting from a cost-effective point of view.

In step b) the low-energy continuous separation of the first solid phase, which contains impurities, and the first liquid phase, rich in phosphate ions, takes place. This separation can be carried out by means of operations for decanting, thickening, concentrating and dehydrating chemical sludge. The obtained supernatant (first liquid phase) contains the phosphate ions present in the ash, without the majority of the impurities that they had, now contained in the first solid phase. The decanted (solid phase) has the advantage of being a stable waste in leaching conditions, meaning that the acid is not able to dissolve this waste and, therefore, it can be easily separated from the first liquid phase rich in phosphates. Furthermore, this waste is made up of inert substances that do not affect the soil in any case but that can be used without negatively affecting the environment, for example, in improving the soil.

Step c) comprises the precipitation of the phosphate ions contained in the first liquid phase, in the form of monocalcium phosphate and dicalcium phosphate, which can be used in food, pharmaceutical and, mainly, fertilizer applications. In order to achieve this precipitate, a calcium compound must be added to the first liquid phase, preferably lime (Ca(OH)₂), in slurry form (milk of lime). This addition must be done at a temperature between 60 and 70°C, and must be stopped once the solution reaches an exact pH value between 4 and 4.5, so that the obtained product is a mixture of monocalcium and dicalcium phosphate, apart from the calcium sulfate. This pH range is optimal when achieving the desired temperature so that both reactions (digestion and chemical precipitation) can be carried out in a coupled manner, thus reducing energy costs. Furthermore, upon failing to reach higher pHs, the amount of lime slurry used is reduced, thus diminishing the operating costs.

In step d) the low-energy continuous separation of the second liquid phase and of the second solid phase, rich in mono and dicalcium phosphates, is carried out. Like in step b), this separation can be carried out by means of operations for decanting, thickening, concentrating and dehydrating chemical sludge. The resulting solid phase of the second separation step d) is a mixture made up of monocalcium phosphate, dicalcium phosphate and calcium sulfate. The latter, despite being a byproduct, has value due to the use thereof in construction and as nutrients in fertilizers.

The second liquid phase is acid, and, in particular embodiments of the method of the invention, it can be recirculated back to step a), being conditioned by means of the removal of the heavy metals that it contains (step e) if necessary.

For the conditioning of the second liquid phase, the following additional steps are carried out:
e) Precipitation of the heavy metals present in the second liquid phase obtained in step d) by means of the addition of a calcium compound (such as NaOH, lime-carbonate system, lime slurry, etc.) until reaching a pH value comprised between 11-13, preferably a pH of 12, giving rise to a third liquid phase and a third solid phase,
f) Continuous separation, without energy consumption, of the third liquid phase, obtained in step e) of the third solid phase, and
g) Recirculation of the third liquid phase, free of heavy metals, to step a).

The method of the invention creates less waste since, excluding the waste obtained in the heavy metal separation process (step e), all of these are recoverable in the market for the use thereof in applications such as agriculture, construction, soil stabilization, etc.

Calcium sulfate is the main waste created and is usually used in construction and as natural fertilizer for agricultural use. The use thereof causes the soil to be gradually renewed and not degrade as easily with the use of chemical fertilizers and abuse of non-rotated crops. It is directly applied to any terrain, allowing for the improvement of Ca and S nutrition, which are essential elements that influence the metabolism of other nutrients in the plant and improve the development of the crops and the resistance thereof to biotic and abiotic stress, and the physical and chemical properties of the soil. It displaces salts and corrects calcium deficiencies in the crops, and does not let the plants be filled with fungi and parasites through the roots thereof, thus having a vigorous plant. It improves leafy growth, reduces flower drop and favors the formation of buds and fruits; it strengthens the stem structure in the plants. The other waste present is the solid phase (inert substances) created after the digestion process (first solid phase), which can be used in construction and in the improvement of soils.

In particular embodiments of the method of the invention, the digestion step a) and chemical precipitation step c) take place in cylindrical reactors concentric to each other (first and second reactor, respectively), in order to achieve the thermal coupling of both processes and with the objective of favoring the thermal exchange from one reactor to the other. The residence time of the step a) in the first digestion reactor is preferably 1 hour. Once this time has been reached, the solution leaves the first reactor through the bottom portion thereof and is transported, with the assistance of a membrane pump, towards the first precipitation step, wherein step b) is performed. Once the first solid phase is separated, it is removed (inert substances), and the first liquid phase is moved, by means of another membrane pump, to the second precipitation (or neutralization) reactor which is located inside the first reactor, concentric to it, where step c) takes place.

Once the suitable pH is reached in the second reactor by means of the addition of Ca(OH)₂, the solution leaves the second reactor, and is moved again by means of the action of a membrane pump to a second separation step (step d), where the second solid phase that makes up the final product and the second liquid phase rich in acid, which is conditioned in order to be recirculated back to the first reactor, are separated. This closed circuit is a great innovative advantage that allows this process to be environmentally sustainable without creating effluent liquids.

The conditioning undergone by the liquid current, rich in acid, takes place in a third agitation reactor and consists of removing the heavy metals (step e) present in the solution, by means of the addition of lime until a pH value comprised between 11 and 13, with the objective of having these heavy metals precipitate. Once the cited pH is reached, the solution is subjected to a third separation phase (step f), where the solid phase (third solid phase), that contains the heavy metals, and the liquid phase (third liquid phase), that is recirculated to the first reactor (step g), remains separated, thus closing the cycle.

In a preferred embodiment of the method of the invention, the separation of steps b), d) and f) takes place in decanters, without energy consumption. Afterwards, a filter press is placed, which enables a greater recovery of the water contained in the decanted solid waste, which can be recirculated back to the process. In the case of the liquid phase obtained after filtering the first solid phase, it is recirculated to the second reactor. In the case of the liquid phase obtained after filtering the third solid phase, it is recirculated to the first reactor. Finally, in the case of the liquid phase obtained after filtering the second solid phase, said liquid phase can be recirculated to the agitation reactor (third reactor), in those cases in which removing heavy metals is necessary, or even to reactor 1 (if removing said impurities is not necessary).

The thermal exchange between the first digestion reactor and the second neutralization reactor makes it so that applying energy on it is not necessary, since the reactions that take place in the first reactor are strongly exothermic, reaching temperatures around 90 °C depending on the reagent volume, while the reactions that take place in the second reactor, even though they are also exothermic, do not surpass 50 °C, in other words, it is necessary to cool the first reactor and heat the second reactor so that both reach optimal operating temperatures.

This objective is reached by designing both reactors to be concentric to each other and with diameter ratios that assure that the volumes of both reactors are able to exchange all the energy without needing external input. In this way, the process is made to be self-sustaining, thus differentiating itself from the rest of the currently existing processes and creating a cost-effective and environmental benefit. Environmental benefit because it thermally couples some processes in order to save energy in a novel and cost-effective way and because it uses decanting separation equipment that does not consume energy. Besides energy savings, the leach liquor used is an acidic liquor free of phosphates, chlorides and nitrates, considerably more costly than sulfuric acid. Furthermore, the characteristics of the method of the invention allow for carrying it out without needing intermediary phases between the digestion and neutralization steps, which gives rise to a much faster and simpler method, entailing important savings in equipment and operation costs.

In a second main aspect of the invention, an installation, in which the method referred to by the first aspect of the invention can be carried out, is envisaged.

This installation, for the recovery of phosphorus from waste incineration ash, comprises:
- a first reactor (1) wherein step a) of the method of the invention can be carried out, and
- a second reactor (2) concentrically located inside the first reactor (1) wherein step c) of the method of the invention can be carried out, which favors the heat exchange between said reactors (1, 2).

In a particular embodiment, the installation comprises a third reactor (3) wherein step e) of the method of the invention can be executed.

In another particular embodiment, the installation comprises at least one decanter (4', 4", 4''') wherein any of steps b), d) and f) of the method of the invention, of separation of a solid phase from a liquid one, can be carried out.

In another particular embodiment, the installation comprises at least one press filter (5), located after each decanter (4', 4", 4'''), such that the solid phase proceeding from each decanter (4', 4", 4''') can pass through said, at least one, press filter (5).

Figure 1 shows a diagram of an embodiment of the installation according to the present invention. The ash and the sulfuric acid solution (H₂O + H₂SO₄) are introduced into the first digestion reactor (1), which has an air agitation system A-101. After the digestion of the ash, according to step a) of the method of the present invention, the solution is transported by means of a membrane pump (6) to a first decanter (4'), where the first solid phase (inert substances) is separated from the first liquid phase that contains the phosphate ions in solution. The first solid phase is transported by means of a membrane pump (6) to a press filter (5), where the greater amount of liquid is extracted and which is recirculated by means of another membrane pump (6) to the second reactor (2), and the first liquid phase is moved by means of a membrane pump (6) to the second reactor (2), located concentrically on the inside of the first reactor (1) and that has an agitation motor M-01 and an additional air agitation system A-102. In the second neutralization reactor (2), lime slurry is added until the first liquid phase reaches the suitable pH, being displaced once again by means of a membrane pump (6) to a second decanter (4"), where the separation of the second solid phase, which makes up the final product, and the second liquid phase, which is recirculated by means of a centrifugal pump (7) to a third agitation reactor (3) for the conditioning thereof, is carried out; this reactor has an agitation motor M-02. The final product (second solid phase) is passed, propelled by a membrane pump (6) through a press filter (5) in order to recover the greatest amount of liquid and recirculate it, by means of a centrifugal pump (6) to the first reactor (1). Moreover, the third reactor (3) is fed with the second liquid phase and a pH-raising agent, calcium hydroxide. The solution formed in this way is moved by means of a membrane pump (6) to a third decanter (4'''), where the third liquid phase is separated from the third solid phase, with the heavy metals. The third liquid phase is recirculated to the first reactor (1) by means of a centrifugal pump (7) and the third solid phase is moved by means of a membrane pump (6) to a press filter (5), in order to withdraw the greatest amount of liquid, which is recirculated by means of a centrifugal pump (7) to the first reactor (1).

### Examples

Two tests were carried out starting with two samples of sewage sludge incineration ash (DMP-61 and DMP-63).

Both tests were carried out by introducing 1.35 kg of waste incineration ash together with 12.83 liters of sulfuric acid at 25% into the leaching reactor (1). After staying in the first reactor (1) for an hour, the solution created was propelled with the help of a membrane pump (6) to a first decanter (4') in which the continuous separation of the first solid phase (impurities) and the first liquid phase rich in phosphate ions is carried out.

The first solid phase is pumped to a press filter (5) by means of the membrane pump (6) in order to achieve the recovery of a greater amount of liquid phase rich in phosphates and thus increase the yield of the process.

The liquid phase obtained both in the first decanter (4') as well as in the press filter (5) are sent by means of the membrane pump (6) to the second neutralization reactor (2).

In the second reactor (2) an amount of lime slurry was added all at once, being different depending on the pH to be reached (the optimal amount to reach pHs between 4 and 4.5 was fixed at about 6 kg).

**Table 1. Phosphate/sulfate ratio obtained in the tested samples**

| **Sample** | **pH** | **Time (min)** | **Temperature (°C)** | **Phosphate/sulfate ratio** |
|---|---|---|---|---|
| DMP-61 | 5.13 | 60 | 65 | 1/4.5 |
| DMP-63 | 4.37 | 60 | 65 | 1/3.2 |

As seen in table 1, for a pH value in the 4.0-4.5 range, considered as optimal, the phosphate/sulfate ratio was substantially greater than that obtained for pHs higher than the defined range, maintaining the rest of the parameters (time and temperature) constant for both cases.

Once the desired pH was reached, the solution was propelled by means of a membrane pump (6) to a second decanter (4"). Just like in the previous case, the solid phase proceeding from the second decanter (4") was pumped by means of a membrane pump (6) to a press filter (5) where the final product was obtained as a solid phase, this product being a mixture of monocalcium phosphate, dicalcium phosphate and calcium sulfate.

The resulting liquid phases of the second decanter (4") DEC-102 and of the press filter (5) were propelled by means of a centrifugal pump (7) to the first reactor (1), without a heavy metal removal step being necessary, since the ash used did not contain significant amounts of these.

## Claims

1. A method for the recovery of phosphorus from waste incineration ash, comprising:
a) Digestion of the ashes with a leach liquor that consists of a sulfuric acid solution at 20 to 40%, making up a first solid phase, which contains impurities, and a first liquid phase, rich in phosphate ions, at a temperature comprised between 60 and 75°C, and at a pH lower than 1.8, during a time comprised between 60 and 120 minutes,
b) Continuous separation, without energy consumption, of the first liquid phase obtained in a) from the first solid phase,
c) Chemical precipitation, thermally coupled to the digestion of the ash from step a), of the phosphate ions contained in the first liquid phase, by means of the addition of lime to the first liquid phase, at a temperature comprised between 60 and 70°C, until reaching a pH comprised between 4.0 and 4.5, giving rise to a second liquid phase, rich in acid, and a second solid phase, made up of a mixture of monocalcium phosphate, dicalcium phosphate and calcium sulfate, and
d) Continuous separation, without energy consumption, of the second solid phase, as a final product, from the second liquid phase.

2. The method according to claim 1, wherein the second liquid phase, rich in acid, separated in step d), is subjected to the following steps:
e) Precipitation of the heavy metals present in the second liquid phase by means of the addition of a calcium compound until a pH value comprised between 11 and 13, giving rise to a third solid phase, with the heavy metals, and a third liquid phase,
f) Continuous separation, without energy consumption, of the third liquid phase, obtained in step e) from the third solid phase, and
g) Recirculation of the second liquid phase, free of heavy metals, to step a).

3. The method according to claim 1, wherein the ash comes from the incineration of sludge from water or industrial waste treatment plants, from animal bones or from animal manure.

4. The method according to claim 1, wherein the calcium compound used in steps c) and e) is lime in slurry form.

5. The method according to any of the claims 1-4, wherein the digestion step a) and chemical precipitation step c) take place in two reactors concentric to each other, the precipitation reactor being inside the digestion reactor, which enables the thermal coupling of both processes.

6. The method according to claim 5, wherein step e) takes place in an agitation reactor.

7. The method according to claim 5 or 6, wherein steps b), d) and f) take place in decanters.

8. The method according to claim 7, wherein the solid phase decanted in steps b), d) and/or f) passes through a press filter to recover and recirculate the water contained in said solid phase.

9. An installation for the recovery of phosphorus from waste incineration ash, **characterized in that** it comprises:
- a first reactor (1) wherein step a) of a method according to any of claims 1 to 8 can be carried out, and
- a second reactor (2) concentrically located inside the first reactor (1) wherein step c) of a method according to any of claims 1 to 8 can be carried out, which favors the heat exchange between said reactors (1, 2).

10. The installation according to claim 9, comprising a third reactor (3) wherein step e) of a method according to any of claims 1 to 8 can be carried out.

11. The installation according to any of claims 9 and 10, comprising at least one decanter (4', 4", 4''') wherein any of steps b), d) and f) of a method according to any of claims 1 to 8 can be carried out.

12. The installation according to claim 11, comprising at least one press filter (5), located after each decanter (4', 4", 4'''), such that the solid phase proceeding from each decanter (4, 4", 4''') can pass through said, at least one, press filter (5).
